# EUROPEAN PATENT APPLICATION

(11) **EP 4 601 269 A1**
(43) Date of publication of application: **13.08.2025**
(21) Application number: 23889174.1
(22) Date of filing: 09.11.2023
(51) Int. Cl.: H04L 67/75, G06F 3/0482, G06F 3/0484, H04L 67/303, H04L 67/306, G06F 3/0481, H04W 4/33, H04W 4/80

(54) **DEVICE CONFIGURATION METHOD AND ELECTRONIC DEVICE SUPPORTING SAME**

(30) Priority: 10.11.2022 KR 20220149610; 07.12.2022 KR 20220169771
(71) Applicant: Samsung Electronics Co., Ltd., Suwon-si, Gyeonggi-do 16677 (KR)
(72) Inventor: SEONG, Joowook, Suwon-si, Gyeonggi-do 16677 (KR); KIM, Dukhyun, Suwon-si, Gyeonggi-do 16677 (KR); SONG, Seunggeun, Suwon-si, Gyeonggi-do 16677 (KR); KIM, Sungkee, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2023/017973
(87) International publication number: WO 2024/101916

(57) **Abstract**

An electronic device according to an embodiment disclosed in the present document may comprise a display, a communication module, a memory, and a processor. The processor may detect a connection of an external device configured to have the same user account as the electronic device. The processor may receive state information of the electronic device or the external device from an external server or the external device. The processor may use the state information to determine at least one function which is performed in association with the external device, and a rule corresponding to the at least one function. The processor may use the state information to determine at least one recommended item related to the at least one function, which satisfies the rule. The processor may display the at least one recommended item on the display.

## Description

### TECHNICAL FIELD

Embodiments disclosed in the present document relate to a device configuration method and an electronic device supporting the same.

### BACKGROUND ART

Technologies for associating and controlling electronic devices, such as smartphones, tablet personal computers (PCs), and/or Internet of Things (IoT) devices, are being used. The electronic device may control or share information with other devices at a short distance or a long distance that are configured to have the same user account. The electronic device may execute various applications by being linked with peripheral devices or devices connected through wireless/wired communication, and may perform various functions.

### DISCLOSURE OF THE INVENTION

### TECHNICAL SOLUTION

An electronic device according to an embodiment may include a display, a communication module, a memory, and a processor. The processor may detect a connection of an external device configured to have the same user account as the electronic device. The processor may receive state information of the electronic device or the external device from an external server or the external device. The processor may use the state information to determine at least one function which is performed in association with the external device, and a rule corresponding to the at least one function. The processor may use the state information to determine at least one recommended item related to the at least one function, which satisfies the rule. The processor may display the at least one recommended item on the display.

A device configuration method according to an embodiment may be performed in an electronic device. The device configuration method may include detecting a connection of an external device configured to have the same user account as the electronic device, receiving state information of the electronic device or the external device from an external server or the external device, determining at least one function executed in association with the external device and a rule corresponding to the at least one function using the state information, determining at least one recommended item related to the at least one function satisfying the rule using the state information, and displaying the at least one recommended item.

### ADVANTAGEOUS EFFECTS

### BRIEF DESCRIPTION OF THE DRAWINGS

FIG. 1 is a block diagram illustrating an electronic device in a network environment according to various embodiments.
FIG. 2 is a block diagram illustrating a program according to various embodiments.
FIG. 3 illustrates a multi-device management system associated with the same user account according to an embodiment.
FIG. 4 is a flowchart illustrating a device configuration method according to an embodiment.
FIG. 5 illustrates state information according to an embodiment.
FIGS. 6A and 6B are software configuration diagrams related to determining recommended items according to an embodiment.
FIG. 7 illustrates display of a recommended item through a settings UI according to an embodiment.
FIGS. 8A to 8E illustrate the determination and display of recommended items for various MDE functions.
FIG. 9 illustrates display of a recommended item through a pop-up according to an embodiment.
FIG. 10 illustrates display of a recommended item through a widget according to an embodiment.

In connection with the description of the drawings, the same or similar reference numerals may be used for identical or similar components.

### MODE FOR CARRYING OUT THE INVENTION

Hereinafter, various embodiments of the present disclosure will be described with reference to the accompanying drawings. However, this is not intended to limit the present disclosure to the specific embodiments, and it is to be construed to include various modifications, equivalents, and/or alternatives of embodiments of the present disclosure. With regard to the description of the drawings, similar reference numerals may be used to refer to similar elements.

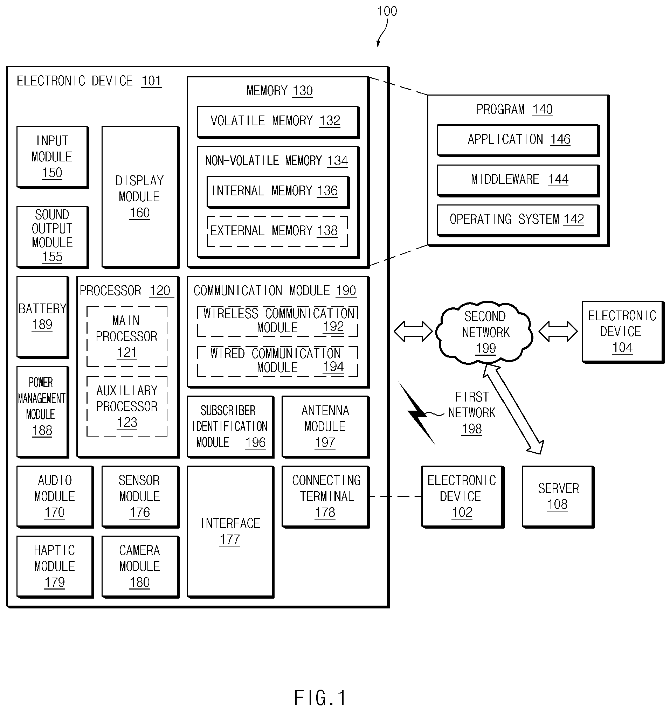

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

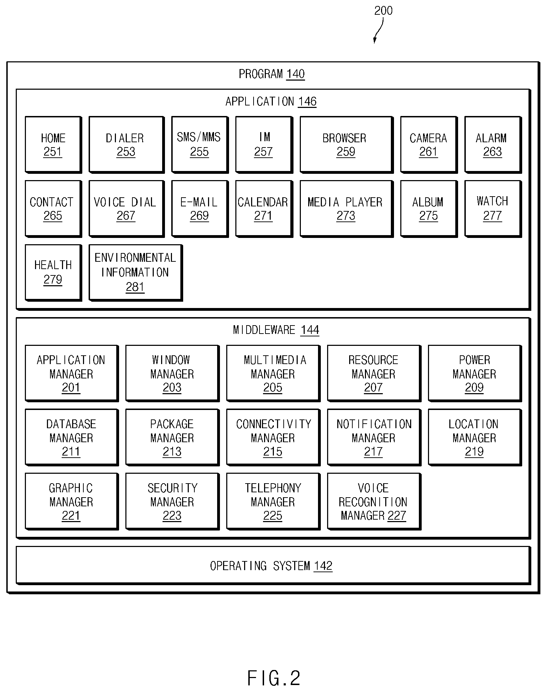

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turnoff) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

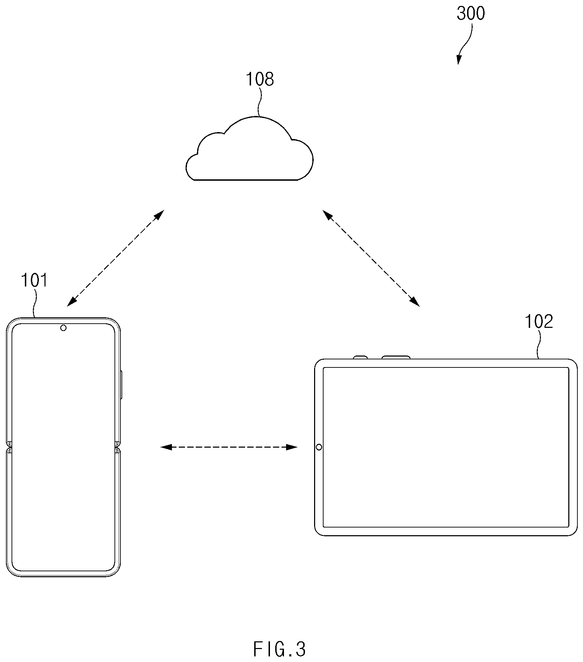

FIG. 3 illustrates a multi-device management system linked to the same user account according to an embodiment.

Referring to FIG. 3, a multi-device management system (e.g., a multi device experience (MDE) intelligence system) 300 may include an electronic device (e.g., an electronic device 101 of FIG. 1) 101 (hereinafter, referred to as a first electronic device), an electronic device (e.g., an electronic device 102 of FIG. 1) 102 (hereinafter, referred to as a second electronic device), and a server (e.g., a server 108 of FIG. 1) 108.

Although FIG. 3 illustrates an example in which the first electronic device 101 is a smart phone and the second electronic device 102 is a tablet PC, the present disclosure is not limited thereto. For example, the first electronic device 101 or the second electronic device 102 may be implemented in various forms such as a laptop PC, a wearable device (e.g., a smart watch, a smart ring, an HMD), a transport device (e.g., a vehicle), a display device (e.g., a TV), or a foldable/rollable device.

The first electronic device 101 and the second electronic device 102 may be configured to have the same user account. For example, the first electronic device 101 and the second electronic device 102 may be in a state in which the first electronic device 101 and the second electronic device 102 are logged in with the same user identification (ID) with respect to an operating system. As another example, the first electronic device 101 and the second electronic device 102 may be in a state in which the first electronic device 101 and the second electronic device 102 are logged in with the same user ID with respect to a designated application (e.g., Microsoft OneDrive or Samsung Account).

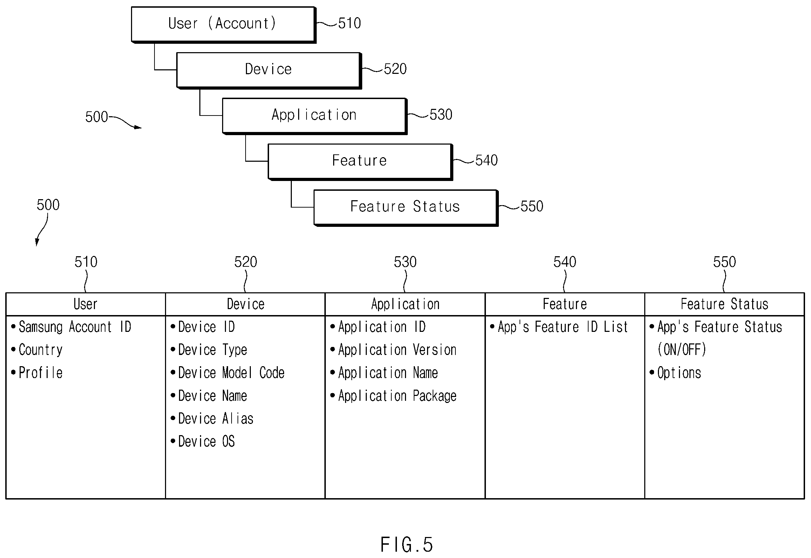

Each of the first electronic device 101 and the second electronic device 102 may transmit and receive state information (hereinafter, referred to as first linkage information) to and from the server 108 through long-range communication. For example, the first linkage information may include user account information, device information, application information, and/or application configuration information related to the first electronic device 101 or the second electronic device 102 (see FIG. 5).

The first electronic device 101 and the second electronic device 102 may transmit and receive state information (hereinafter, referred to as second linkage information) to and from each other through short-range communication. The second linkage information may include user account information, device information, application information, and/or application configuration information related to the first electronic device 101 or the second electronic device 102 (see FIG. 5).

When the first electronic device 101 and the second electronic device 102 are configured to have the same user account, the first electronic device 101 and the second electronic device 102 may perform a function (hereinafter, referred to as a multi device experience (MDE) function) executed in association with each other. For example, the MDE functionality may be an auto hotspot, a BT sync, a WiFi sync, a file transfer function (quick share), a copy and paste function (copy&paste), an application continuous execution function (App Continuity), and/or a multi-control function (multi-control).

The first electronic device 101 or the second electronic device 102 may identify designated conditions (or rules) (hereinafter, path rules) related to the MDE function by using the first linkage information and the second linkage information, and display a recommended item related to the MDE function. The first electronic device 101 or the second electronic device 102 may receive the path rule corresponding to the MDE function from the server 108.

The first electronic device 101 or the second electronic device 102 may display the recommended item as a part of a user interface (UI) of a setting application (e.g., settings) (hereinafter, referred to as a settings UI), or may display the recommended item in a separate pop-up form.

Hereinafter, a case in which the first electronic device 101 determines and displays the recommended item will be mainly described, but the present disclosure is not limited thereto. The second electronic device 102 may also determine and display the recommended item.

The server 108 may receive various information related to the execution/setting/change of the MDE function from the first electronic device 101 or the second electronic device 102. The server 108 may transmit and receive the first linkage information to and from the first electronic device 101 or the second electronic device 102. In addition, the server 108 may generate and update the path rule for determining the recommended item. The server 108 may transmit the path rule to the first electronic device 101 or the second electronic device 102.

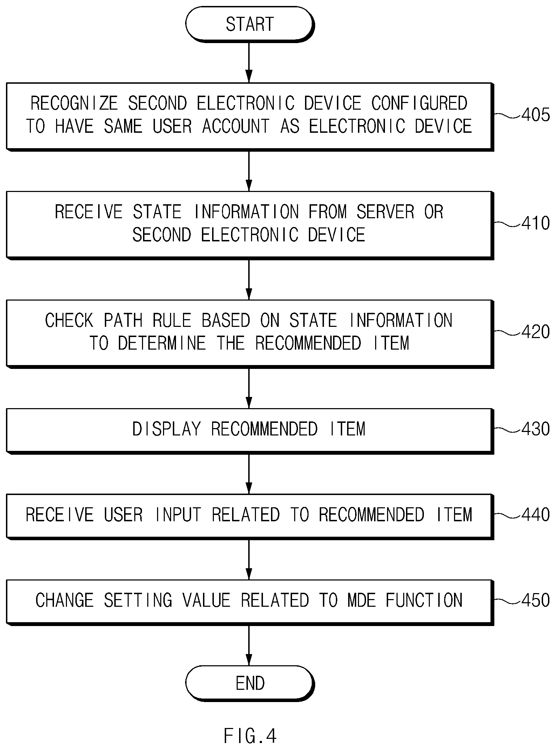

FIG. 4 is a flowchart illustrating a device configuration method according to an embodiment.

Referring to FIGS. 1 and 4, in operation 405, a processor 120 of the first electronic device 101 may recognize the second electronic device 102 configured to have the same user account as the electronic device 101. For example, the first electronic device 101 and the second electronic device 102 may be logged in with the same user ID in relation to an operating system. For another example, the first electronic device 101 and the second electronic device 102 may be in a state in which the first electronic device 101 and the second electronic device 102 are logged in with the same user ID with respect to a designated application (e.g., Microsoft OneDrive or Samsung Account).

According to an embodiment, the processor 120 of the first electronic device 101 may recognize the second electronic device 102 through short-range communication (e.g., Bluetooth, wireless fidelity (Wi-Fi) direct). According to another embodiment, the processor 120 of the first electronic device 101 may recognize the second electronic device 102 through the same network device (e.g., an access point (AP)). According to another embodiment, the processor 120 of the first electronic device 101 may recognize the second electronic device 102 through long-range communication (e.g., a cellular network or a 5G network).

The processor 120 of the first electronic device 101 may recognize the second electronic device 102 logged in with the same user account through short-range communication, and when the second electronic device 102 is a device supporting the MDE function, the processor 120 of the first electronic device 101 may perform operations 410 to 450 below.

In operation 410, the processor 120 of the first electronic device 101 may receive state information from the server 108 or the second electronic device 102. The state information may be information required to check the path rule regarding the MDE function. The state information may include user account information, device information, application information, and/or application configuration information.

According to an embodiment, the state information may include first linkage information based on a user account transmitted from the server 108 through long-range communication and second linkage information based on a user account transmitted from the second electronic device 102 through short-range communication.

In operation 420, the processor 120 of the first electronic device 101 may check the path rule corresponding to the MDE function based on the state information to determine the recommended item. The recommended item may be a requirement (e.g., user consent or option selection) under which a user input is required to execute the MDE function in the first electronic device 101 or the second electronic device 102.

The processor 120 may use the path rule stored in an internal memory 130, or may request the path rule related to the MDE function from an external server 108, and may receive and use the corresponding path rule. Depending on the MDE function, conditions in various orders may be included in the path rule.

In operation 430, the processor 120 may display a recommended item satisfying the path rule related to the MDE function on the display.

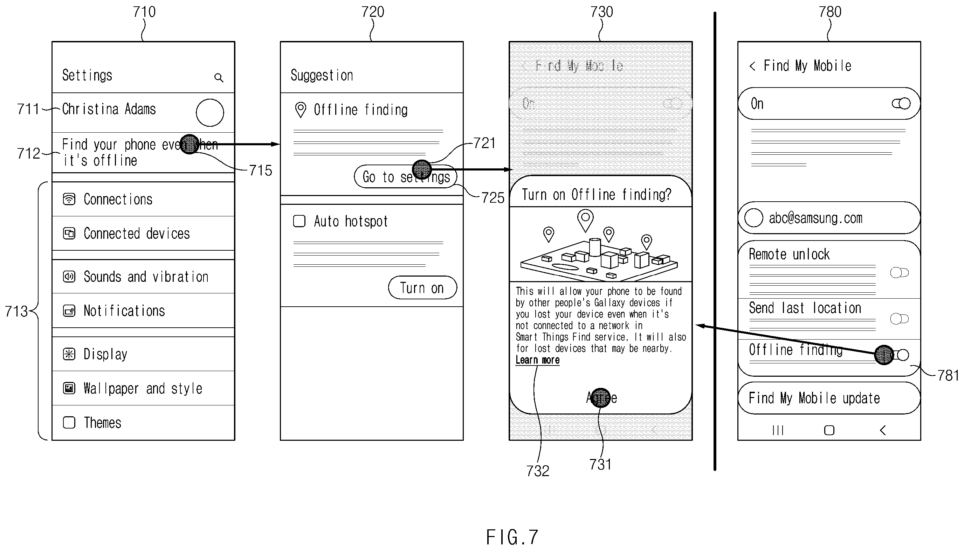

According to an embodiment, the processor 120 may display the determined recommended item as a part of the settings UI. For example, the processor 120 may display the determined recommended item as a first item of the settings UI, and display the existing other setting items (e.g., network setting, display setting, security setting) below the recommended item (see FIG. 7).

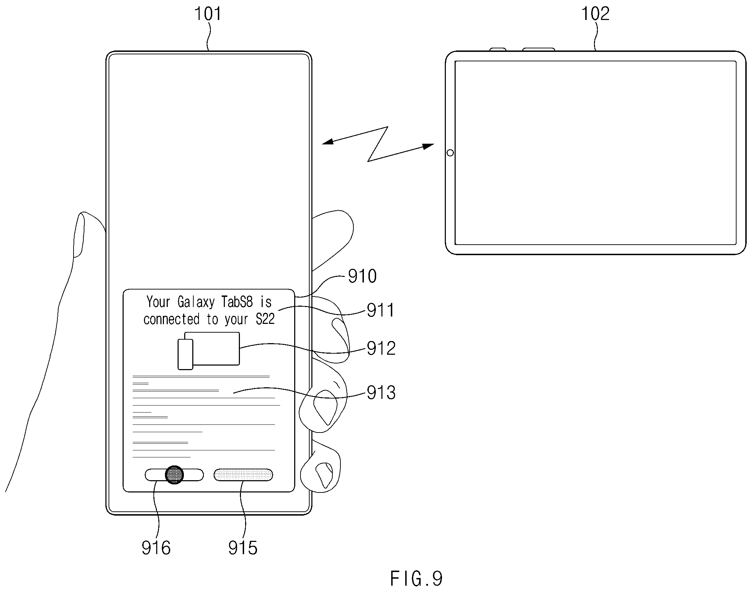

According to another embodiment, the processor 120 may display a pop-up related to the recommended item. The pop-up may include information about the second electronic device 102 (e.g., a device name, a device icon, or a device image), a description about an MDE function to be executed, an approval button, and a cancel button (see FIG. 9).

In operation 440, the processor 120 may receive a user input related to the recommended item. For example, when a user input for selecting a recommended item is generated in a settings UI scene, the processor 120 may display a UI (hereinafter, referred to as an MDE UI) for changing a setting value related to the MDE function related to the recommended item.

According to an embodiment, the MDE UI entering through the recommended item and the UI for changing the setting value displayed in the application corresponding to the MDE function (hereinafter, referred to as an MDE application) may be the same.

When a plurality of recommended items are determined, the processor 120 may display a list of the plurality of recommended items and allow the user to select a desired recommended item.

In operation 450, the processor 120 may change a setting value related to the MDE function according to a user input and store the changed setting value. The processor 120 may transmit the changed setting value to the MDE application related to the MDE function. The MDE application may be executed based on the changed setting value.

According to an embodiment, the processor 120 may transmit the changed setting value to the external server 108 to be used for synchronization and path rule update.

FIG. 5 illustrates state information according to an embodiment. FIG. 5 is illustrative and is not limited thereto.

Referring to FIG. 5, state information (or contextual information, context data) may include first linkage information and second linkage information. The first linkage information may be information transmitted from the server 108 to the first electronic device 101. For example, the first linkage information may include account and far equipment information, synchronization/backup information, and/or synchronization history information. The second linkage information may be information transmitted from the second electronic device 102 to the first electronic device 101. For example, the second linkage information may include short-range device identification information, a wearable device list connected to the second electronic device 102, an input device connected to the second electronic device 102, and/or various setting values of the second electronic device 102.

According to an embodiment, state information 500 may include user information 510, device information 520, application information 530, application feature information 540, and/or application feature state information (feature status) 550.

The user information 510 may include an account ID, a country, and/or a profile related to the user. The device information 520 may include information such as device ID, device type, and/or device model code.

The application information 530 may include information such as application ID, application version, and/or application name regarding the MDE application. The application feature information 540 may include a list of features related to the MDE function in the MDE application. The application feature state information (feature status) 550 may include a setting value (on/off)) and/or an option state of a feature related to the MDE function.

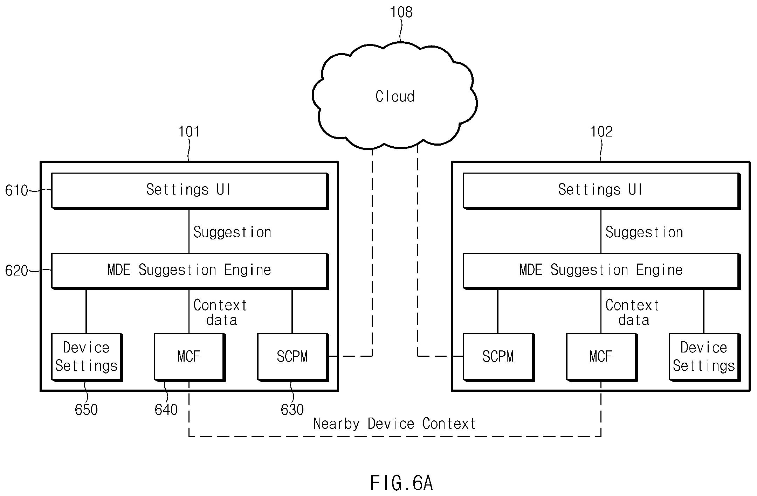

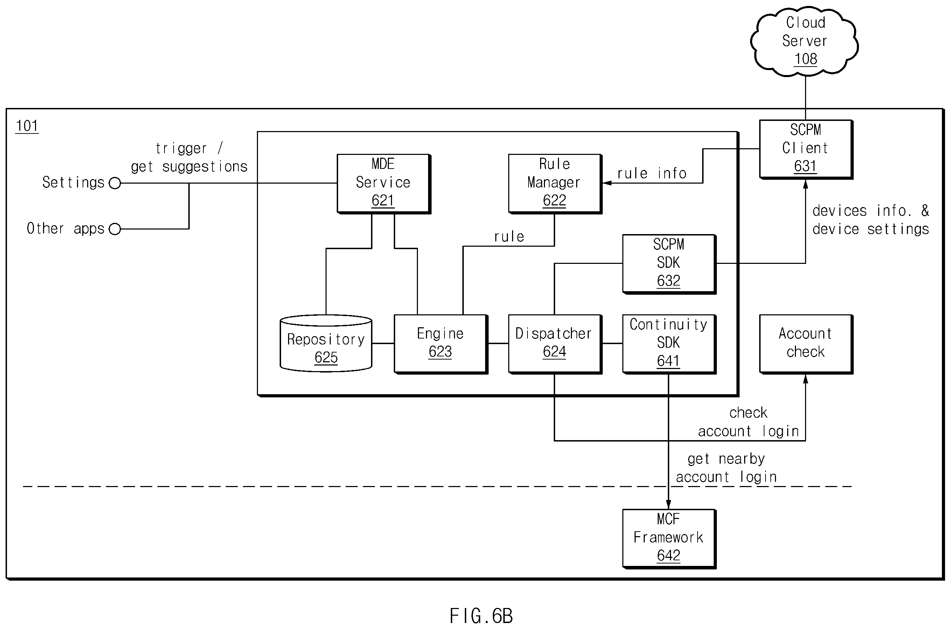

FIGS. 6A and 6B are software configuration diagrams related to determination of a recommended item according to an embodiment. FIGS. 6A and 6B are illustrative and are not limited thereto. An operation of each configuration FIGS. 6A and 6B may be an operation of the processor 120 of FIG. 1.

Referring to FIG. 6A, the first electronic device 101 may include a settings UI (or display unit) 610, an MDE suggestion engine (or a recommended item determination unit) 620, an SCPM (or a server communication unit) 630, an MCF (or a short-range communication unit) 640, and a device setting unit 650. The second electronic device 102 may also have the same or similar configuration as the first electronic device 101.

The settings UI 610 may display the recommended items received from the MDE suggestion engine 620.

The MDE suggestion engine 620 may receive the first linkage information and the path rule related to the MDE function from the SCPM 630. The MDE suggestion engine 620 may receive the second linkage information from the MCF 640. The MDE suggestion engine 620 may receive the setting value of the first electronic device 101 from the device setting unit 650.

The MDE suggestion engine 620 may check whether a path rule corresponding to the MDE function is satisfied by using the set value, the first linkage information, and the second linkage information to determine the recommended item. The MDE suggestion engine 620 may provide the determined recommended item to the settings UI 610.

Referring to FIG. 6B, the MDE suggestion engine 620 may include an MDE service 621, a rule manager 622, an engine 623, a dispatcher 624, and a repository 625.

The MDE service 621 may receive a request for a recommended item through an external trigger and execute the engine 623. For example, the trigger may be the occurrence of a user input that causes the settings UI 610 to be displayed, and/or recognition of the second electronic device 102 through short- range communication. The MDE service 621 may provide a recommended item stored in the repository 625 to a setting application (Settings).

The rule manager 622 may receive a path rule from the SCPM client 631 and provide the path rule to the engine 623.

The engine 623 may load the path rule received from the Rule Manager 622 and call the dispatcher 624 based on the loaded path rule. The engine 623 may generate/perform a flow controller that matches the candidate scenario read from the rule manager 622. The candidate scenario may be a list of recommended items that the corresponding device may recommend, which are read from the rule manager 622.

The dispatcher 624 may perform a request for each Action Tag loaded from the rule manager 622. The dispatcher 624 may receive state information from the SCPM client 631 and the MCF framework 642 according to Action, select recommended items, and return the recommended items to the engine 623. The dispatcher 624 may check whether the first electronic device 101 and the second electronic device 102 are logged in with the same user account. According to an embodiment, the dispatcher 624 may identify whether the first electronic device 101 and the second electronic device 102 are in a state in which the first electronic device 101 and the second electronic device 102 are logged in with the same user account by using a server separate from the server 108.

The repository 625 may store the recommended item determined through the engine 623. The stored recommended item may be returned to a setting application (Settings) or other applications by the MDE service 621.

Referring to FIGS. 6A and 6B, the Samsung Cloud Platform Manager (SCPM) 630 may include an SCPM client 631 and an SCPM SDK 632.

The SCPM client 631 provides the path rule to the rule manager 622, and may provide user data necessary for an account-based service such as user/device registration, authentication, data storage, synchronization, backup, and/or sharing. The SCPM SDK 632 may provide the first linkage information to the dispatcher 624.

Referring to FIGS. 6A and 6B, the multi-device connectivity framework (MCF) 640 may include a continuity SDK 641 and an MCF framework 642 for searching for the same user account-based peripheral devices and providing communication functions with the corresponding device. The continuity SDK 641 may provide second linkage information. The MCF framework 642 may provide the same user account-based peripheral device search, communication with the device, and/or API of device retrieval.

According to an embodiment, the MCF 640 may receive account-based device information from the server 108 and extract identifiable authentication information (e.g., fingerprint information) through the information. The MCF 640 may search for whether there is a short-range device having the same authentication information (e.g., fingerprint information) to provide information.

The device setting 650 may provide state information of the first electronic device 101 to the MDE suggestion engine 620.

FIG. 7 illustrates display of a recommended item through a settings UI according to an embodiment. FIG. 7 is illustrative and is not limited thereto.

Referring to FIGS. 1 and 7, the processor 120 of the first electronic device 101 may check the path rule related to the MDE function based on the first linkage information and the second linkage information. The processor 120 may determine a recommended item satisfying the path rule. The processor 120 may display the recommended item as a part of a UI of an application (e.g., settings) separate from the MDE application.

For example, a settings UI 710 may include user account information 711, a recommended item 712, and an existing setting item 713. In the settings UI 710, the processor 120 may display the user account information 711 and the recommended item 712 with priority over the existing setting item 713 to allow the user to easily recognize the recommended item 712.

According to an embodiment, when the recommended item is determined, the processor 120 may induce the user to enter the settings UI 710 through a status bar notification. Alternatively, the processor 120 may store recommended items in a designated order without separate notification, and when the settings UI 710 is displayed, may display the user account information 711 and the recommended items 712 on the settings UI 710.

When the first user input 715 occurs in the recommended item 712, a list 720 of recommended items may be displayed. The list 720 may include a button 721 for changing a description and a setting value for the recommended item.

The processor 120 may display recommended items that occurred during a designated time according to a designated priority (e.g., in order of most recent occurrence time, in order of most frequently used functions). For example, when the priority of the newly occurred recommended item is high, the processor 120 may display a new recommended item on the top of the list 720.

When the priority of the new recommended item is the same as the priority of the existing recommended item, the processor 120 may arrange recommended items according to the occurrence time. When the condition related to the recommended item is changed, the processor 120 may change the order of the list 720 according to the changed condition.

According to an embodiment, when there is one recommended item, the processor 120 may omit the display of the list 720 and immediately display an MDE UI 730 for changing the setting value.

When the second user input 725 occurs in the button 721 for changing the setting value, the processor 120 may display the MDE UI 730 for changing the setting value of the MDE application. The MDE UI 730 may include a button 731 for changing the setting value and a button 732 for moving to the MDE application.

Through the MDE UI 730, the user may conveniently change an option for executing the MDE function. The MDE UI 730 may be the same as the UI related to an item 781 selected on an execution screen 780 of the MDE application.

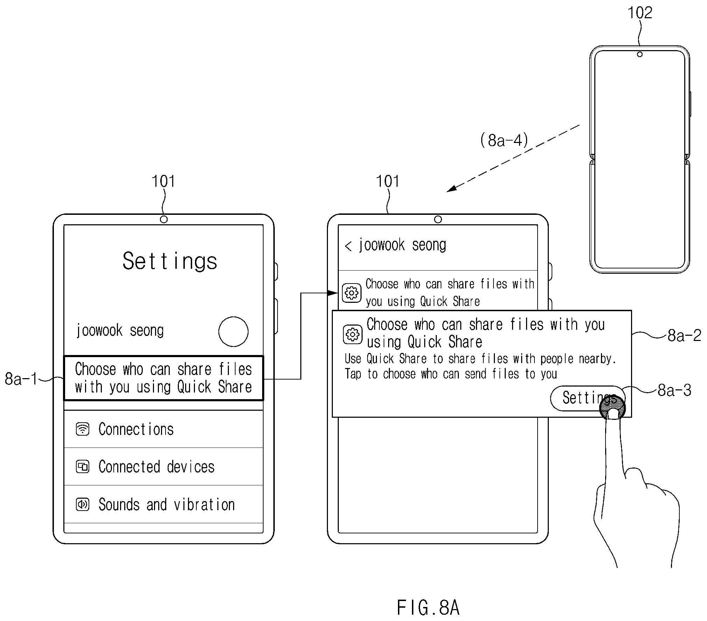

FIGS. 8A to 8E illustrate the determination and display of recommended items for various MDE functions. FIGS. 8A to 8E are illustrative and are not limited thereto.

FIG. 8A illustrates the determination and display of a recommended item for a file sharing function according to an embodiment.

Referring to FIGS. 1 and 8A, the processor 120 of the first electronic device 101 may determine a recommended item according to a designated path rule for a file sharing function (e.g., quick share) according to a designated short-range communication scheme. The processor 120 may receive the path rule for the file sharing function from the server 108.

According to an embodiment, the processor 120 may determine whether to display the recommended items related to the file sharing function according to a path rule based on the user account, deactivation of the file sharing function, and use history of the file sharing function.

For example, the path rules related to the file sharing function may be the conditions under which the first electronic device 101 and the second electronic device 102 are logged in with the same user account, the file sharing function using short-range is deactivated in the first electronic device 101, and the file sharing function has a history of being activated in the first electronic device 101.

When the path rule related to the file sharing function is satisfied, the processor 120 may display a recommended item 8a-1 related to the file sharing function as a part of the settings UI. For example, the recommended item 8a-1 may be displayed as a message such as "Set Quick Share sharing permission target". When a user input occurs in the recommended item 8a-1, the processor 120 may display an MDE UI 8a-2 for changing the setting value. The MDE UI 8a-2 for changing the setting value may include a setting value change button 8a-3.

When a user input occurs in the setting value change button 8a-3, the file sharing function may be executed and file transmission by a designated short-range communication between the first electronic device 101 and the second electronic device 102 may be executed (8a-4).

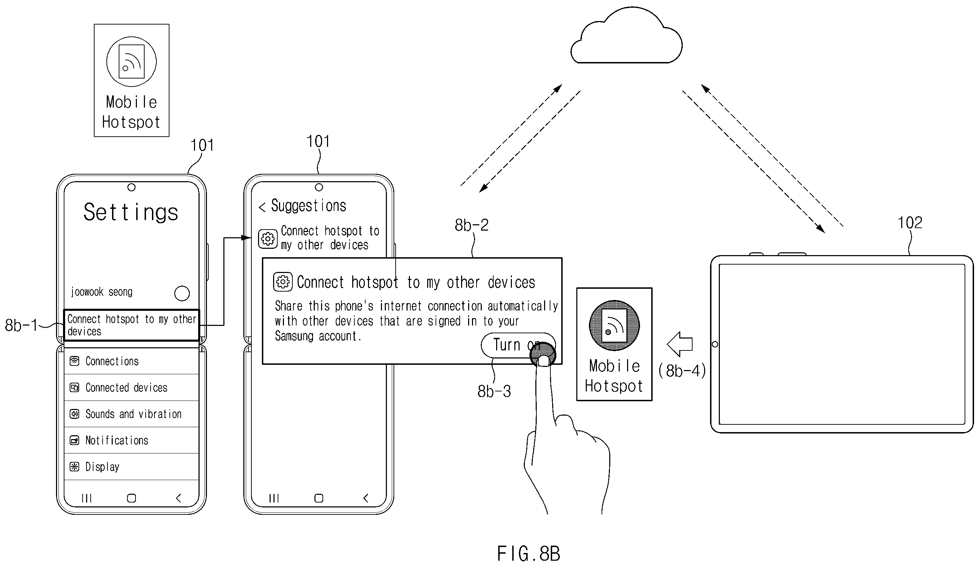

FIG. 8B illustrates the determination and display of the recommended item for an automatic hotspot function according to an embodiment.

Referring to FIGS. 1 and 8B, the processor 120 may determine the recommended item according to a path rule designated for an automatic hotspot function. The processor 120 may receive the path rule for the automatic hotspot function from the server 108.

According to an embodiment, the processor 120 may determine whether to display recommended items related to the automatic hotspot function according to a path rule based on a user account, the number of same account devices, and deactivation of the hotspot.

For example, the path rule related to the automatic hotspot function may be conditions under which the first electronic device 101 and the second electronic device 102 are logged in with the same user account, there are two or more devices with the same account, and the hotspot function is deactivated in the first electronic device 101.

When the path rule related to the hotspot function is satisfied, the processor 120 may display a recommended item related to automatic hotspot 8b-1 as a part of the settings UI. For example, the recommended item 8b-1 may be displayed as a message such as "Connect hotspot directly to my other devices". When a user input occurs in the recommended item 8b-1, the processor 120 may display an MDE UI 8b-2 for changing the setting value. The MDE UI 8b-2 for changing the setting value may include a setting value change button 8b-3.

When a user input occurs in the setting value change button 8b-3, an automatic hotspot function may be executed. When the WiFi connection of the second electronic device 102 is turned ON, the hotspot function of the first electronic device 101 is automatically activated without a separate password input, and the second electronic device 102 may transmit and receive wireless data using the cellular communication of the first electronic device 101 (8b-4).

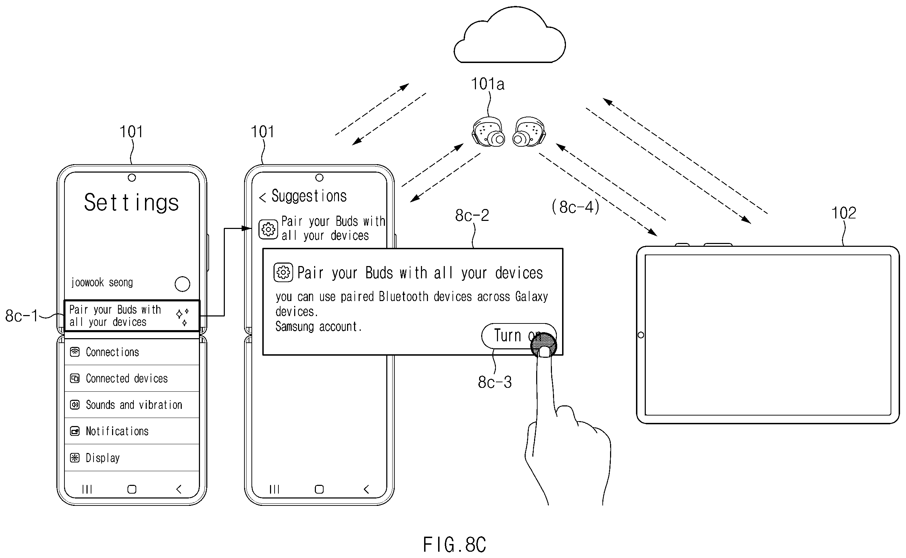

FIG. 8C illustrates the determination and display of a recommended item for a Bluetooth synchronization function according to an embodiment.

Referring to FIGS. 1 and 8C, the processor 120 may determine a recommended item according to a designated path rule for a Bluetooth synchronization function. The processor 120 may receive the path rule for the Bluetooth synchronization function from the server 108.

According to an embodiment, the processor 120 may determine whether to display the recommended items related to the Bluetooth synchronization function according to a path rule based on a user account and deactivation of the Bluetooth synchronization function.

For example, the path rules related to the Bluetooth synchronization function may be conditions under which the first electronic device 101 and the second electronic device 102 are logged in with the same user account and the Bluetooth synchronization function is deactivated in the first electronic device 101.

When the path rules related to the Bluetooth synchronization function is satisfied, the processor 120 may display a recommended item 8c-1 related to Bluetooth synchronization function as a part of the settings UI. For example, the recommended item 8c-1 may be displayed as a message such as "Synchronize connected Bluetooth information". When a user input occurs in the recommended item 8c-1, the processor 120 may display a MDE UI 8c-2 for changing the setting value. The MDE UI 8c-2 for changing the setting value may include a setting value change button 8c-3.

When a user input occurs in the setting value change button 8c-3, the Bluetooth synchronization function may be executed. The second electronic device 102 may be automatically paired with a device (e.g., a wireless earphone) 101a paired with the first electronic device 101 without additional authentication to transmit and receive a signal to and from the device 101a by the Bluetooth communication (8c-4).

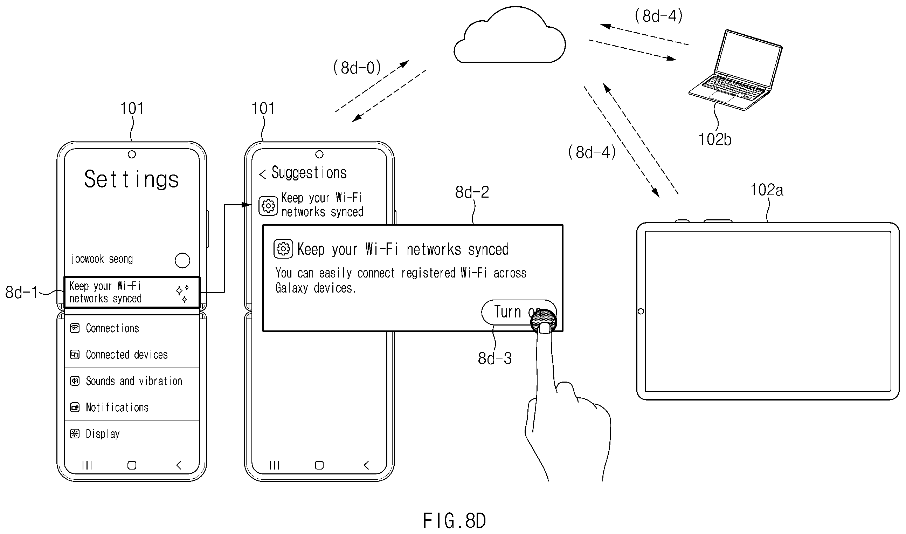

FIG. 8D illustrates the determination and display of a recommended item for a WiFi synchronization function according to an embodiment.

Referring to FIGS. 1 and 8D, the processor 120 may determine a recommended item according to a path rule designated for the WiFi synchronization function. The processor 120 may receive a path rule for the WiFi synchronization function from the server 108.

According to an embodiment, the processor 120 may determine whether to display a recommended item related to the WiFi synchronization function according to a path rule based on a user account, the deactivation of the WiFi synchronization function, and whether there is a connected WiFi.

For example, the path rules related to the WiFi synchronization function may be the conditions under which the first electronic device 101 and second electronic devices 102a and 102b are logged in with the same user account, the WiFi synchronization function is deactivated, and the first electronic device 101 is connected to WiFi (8d-0).

When the path rule related to the WiFi synchronization function is satisfied, the processor 120 may display a recommended item 8d-1 related to WiFi synchronization as a part of the settings UI. For example, the recommended item 8d-1 may be displayed as a message such as "Synchronize connected WiFi information". When a user input occurs in the recommended item 8d-1, the processor 120 may display an MDE UI 8d-2 for changing the setting value. The MDE UI 8d-2 for changing the setting value may include a setting value change button 8d-3.

When a user input occurs in the setting value change button 8d-3, the WiFi synchronization function may be executed. The second electronic devices 102a and 102b may be connected to an access point (AP) to which the first electronic device 101 is connected without inputting a separate password and transmit and receive wireless communication signals thereto and therefrom (8d-4).

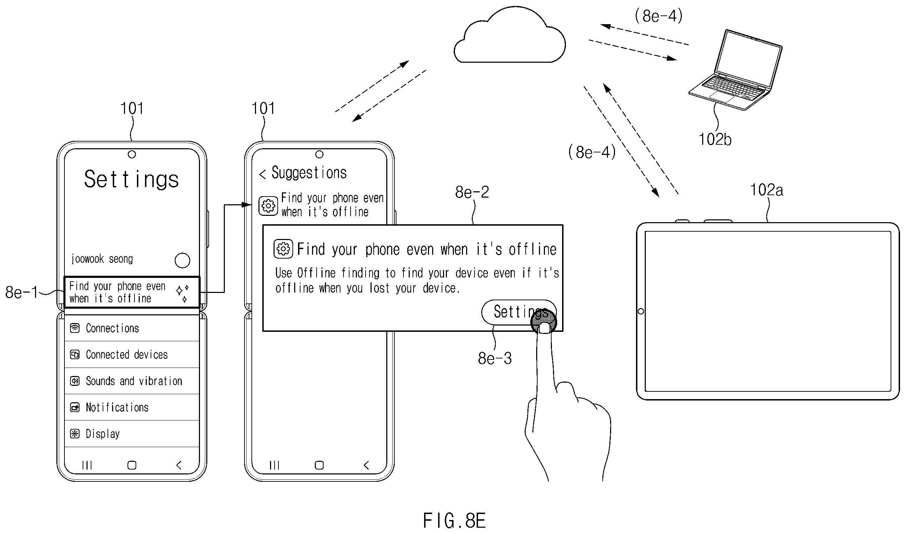

FIG. 8E illustrates the determination and display of a recommended item for an offline device finding function according to an embodiment.

Referring to FIGS. 1 and 8E, the processor 120 may determine a recommended item according to a designated path rule for the offline device finding function. The processor 120 may receive a path rule for the offline device finding function from the server 108.

According to an embodiment, the processor 120 may determine whether to display the recommended item related to the offline device search function according to a path rule based on a user account, a non-designated country, and deactivation of the offline device search function.

For example, the path rules related to the offline device search function may be conditions under which the first electronic device 101 and the second electronic device 102a and 102b are logged in with the same user account, the first electronic device 101 is used in a region other than a designated country, and the offline device search function is deactivated.

When the path rules related to the offline device search function is satisfied, the processor 120 may display a recommended item 8e-1 related to offline device search as a part of the settings UI. For example, the recommended item 8e-1 may be displayed as a message such as "Find my device even when it is offline". When a user input occurs in the recommended item 8e-1, the processor 120 may display an MDE UI 8e-2 for changing the setting value. The MDE UI 8e-2 for changing the setting value may include a setting value change button 8e-3.

When a user input occurs in the setting value change button 8e-3, the offline device finding function may be executed. When a user loses the first electronic device 101, the first electronic device 101 may be found by using the second electronic devices 102a and 102b (8e-4).

FIGS. 8A to 8E are illustrative and are not limited thereto. For example, the MDE function may be a synchronization or backup related function (e.g., All Sync/Auto Backup, All Sync, Auto Backup). The processor 120 may determine whether to display a synchronization or backup related recommended item according to a path rule that includes conditions such as a user account, deactivation of synchronization or backup related functions, or whether it is linked with other accounts.

FIG. 9 illustrates display of a recommended item through a pop-up according to an embodiment. FIG. 9 is illustrative and is not limited thereto.

Referring to FIG. 9, the processor 120 of the first electronic device 101 may check a path rule based on the first linkage information and the second linkage information to determine a recommended item related to the MDE function. The processor 120 may display the MDE UI related to the determined recommended item through a pop-up 910.

The pop-up 910 may include device information 911, an icon or image 912 of the second electronic device 102, display 913 of information about MDE function or changing information, a setting value change button 915, and/or an additional information display button 916.

When the recommended item occurs, the user may immediately check the recommended item through the pop-up and may change a setting value related to the MDE function.

According to an embodiment, the processor 120 may display recommended items related to frequently used or preset MDE functions through the pop-up 910. For example, the processor 120 may provide an application continuous execution function (APP continuity) to the pop-up 910.

According to an embodiment, a recommended item of a function related to the connection of the input device may be displayed through the pop-up 910. For example, the path rules related to a wireless keyboard sharing function may be conditions under which the first electronic device 101 and the second electronic device 102 are logged in with the same user account, the wireless keyboard sharing function is deactivated in the first electronic device 101, and the wireless keyboard sharing function has a history of being activated in the first electronic device 101.

When the path rule related to the wireless keyboard sharing function is satisfied, the processor 120 may display the pop-up 910 including wireless keyboard information, an icon or image of the wireless keyboard, a setting value change button, an additional information display button, or a cancel button. When a designated user input occurs in the setting value change button, the second electronic device 102 may share the same wireless keyboard device as the first electronic device without an authentication process such as pairing or password input.

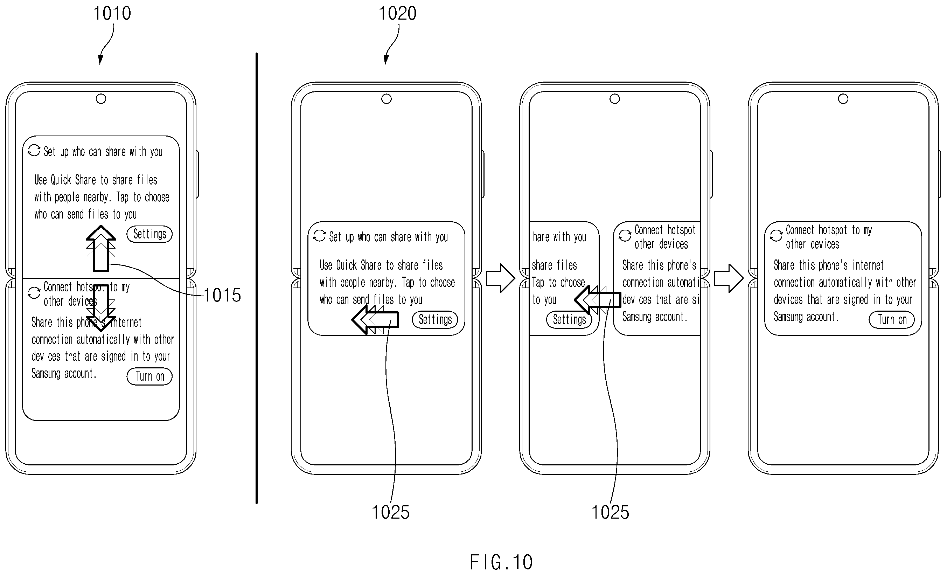

FIG. 10 illustrates display of a recommended item through a widget according to an embodiment. FIG. 10 is illustrative and is not limited thereto.

Referring to FIG. 10, the processor 120 of the first electronic device 101 may check a path rule based on the first linkage information and the second linkage information to determine a recommended item related to the MDE function. The processor 120 may display the MDE UI related to the determined recommended item through a vertical widget 1010 or a horizontal widget (or stacked widget) 1020.

When a plurality of recommended items occur, the processor 120 may display the recommended items as widgets according to a time order or a priority. When a user input occurs in a designated direction, the processor 120 may change the widget of the recommended item. For example, when an up-and-down direction input 1015 occurs in the vertical widget 1010, a displayed recommended item may be changed. For another example, when a left-and-right direction input 1025 occurs in the horizontal widget 1020, the displayed recommended item may be changed.

FIG. 10 is illustrative and is not limited thereto. For example, the processor 120 may display the MDE UI related to the determined recommended item as a status bar notification.

The electronic device 101 according to an embodiment may include the display 160, the communication module 190, the memory 120, and the processor 130. The processor 120 may detect a connection of an external device 102, 104, 102a, or 102b configured to have the same user account as the electronic device 101, receive state information of the electronic device 101 or the external device 102, 104, 102a, or 102b from the external server 108 or the external device 102, 104, 102a, or 102b, use the state information to determine at least one function which is performed in association with the external device 102, 104, 102a, or 102b, and a rule corresponding to the at least one function, use the state information to determine at least one recommended item related to the at least one function, which satisfies the rule, and display the at least one recommended item on the display 160.

According to an embodiment, the processor 120 may display the at least one recommended item as a part of a first user interface executed in setting applications of the electronic device 101.

According to an embodiment, the processor 120 may display information about the user account and the at least one recommended item together in the first user interface.

According to an embodiment, the processor 120 may display the at least one recommended item on a designated area of the first user interface.

According to an embodiment, the processor 120 may display a description of the function in association with the at least one recommended item in the first user interface.

According to an embodiment, the processor 120 may display a second user interface for changing a setting value related to the function when a first user input designated in at least one of the displayed recommended items occurs.

According to an embodiment, the processor 120 may display a third user interface for setting an application related to the function when a third user input designated in at least one of the displayed recommended items occurs.

According to an embodiment, the processor 120 may display a list of the at least one recommended item when a first user input designated in at least one of the displayed recommended items occurs.

According to an embodiment, the processor 120 may sort the list according to a specified priority or time order.

According to an embodiment, the state information may include information about the user account, information about the electronic device 101 or the external device 102, 104, 102a, or 102b, information about an application executable in the electronic device 101 or the external device 102, 104, 102a, or 102b.

According to an embodiment, the processor 120 may receive the rule from the external server 108 and store the rule in the memory 130.

According to an embodiment, the processor 120 may display the at least one recommended item as a pop-up.

According to an embodiment, the processor 120 may display the at least one recommended item as a widget that is movable in a designated direction.

According to an embodiment, the function may include at least one of auto hotspot, file sharing using short-range communication, offline device finding, Bluetooth synchronization, WiFi synchronization, and backup.

The device configuration method according to an embodiment may be performed in the electronic device 101. The method may include detecting a connection of the external device 102, 104, 102a, or 102b configured to have the same user account as the electronic device 101, receiving state information of the electronic device 101 or the external device 102, 104, 102a, or 102b from the external server 108 or the external device 102, 104, 102a, or 102b, determining at least one function executed in association with the external device 102, 104, 102a, or 102b and a rule corresponding to the at least one function using the state information, determining at least one recommended item related to the at least one function satisfying the rule using the state information, and displaying the at least one recommended item.

According to an embodiment, the operation of displaying the at least one recommended item may include displaying the at least one recommended item as a part of a first user interface executed in a setting application (settings) of the electronic device 101.

According to an embodiment, the displaying of the at least one recommended item may include displaying information about the user account and the at least one recommended item together in the first user interface.

According to an embodiment, the method may further include displaying a second user interface for changing a setting value related to the function when a first user input designated in the displayed at least one recommended item occurs.

According to an embodiment, the method may further include displaying a list of the at least one recommended item when a first user input designated in the displayed at least one recommended item occurs.

According to an embodiment, the state information may include information about the user account, information about the electronic device 101 or the external device 102, 104, 102a, or 102b, information about an application executable in the electronic device 101 or the external device 102, 104, 102a, or 102b.

When the electronic device recognizes a peripheral device and executes a related function, the electronic device should check a setting corresponding to each function and make multiple inputs on the settings screen of each application to activate the corresponding function. The electronic devices do not inform users of conditions (whether an option is ON or not) and restrictions for each function, and thus users may misunderstand that the function is not operated.

When the electronic device according to the embodiments disclosed in the present document are configured to have the same account as a peripheral device or is connected to a short-range network, the electronic device may display a recommended item for the executable function. The recommended item may be displayed as a part of the settings UI or may be displayed as a pop-up. The user may simply change the setting value of the corresponding function.

When information acquired through the server or information acquired from the peripheral device satisfies a designated rule, the electronic device according to the embodiments disclosed in the present document may display a recommended item for an executable function.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 10) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160);
a communication module (190);
a processor (120); and
a memory (130),
wherein the processor (120)
detects a connection of an external device (102, 104, 102a, 102b) configured to have the same user account as the electronic device (101),
receives state information of the electronic device (101) or the external device (102, 104, 102a, or 102b) from an external server (108) or the external device (102, 104, 102a, 102b),
uses the state information to determine at least one function which is performed in association with the external device (102, 104, 102a, 102b), and a rule corresponding to the at least one function,
uses the state information to determine at least one recommended item related to the at least one function, which satisfies the rule, and
displays the at least one recommended item on the display (160).

2. The electronic device (101) of claim 1, wherein the processor (120) displays the at least one recommended item as a part of a first user interface executed in a setting application (settings) of the electronic device (101).

3. The electronic device (101) of claim 2, wherein the processor (120) displays information about the user account and the at least one recommended item together in the first user interface.

4. The electronic device (101) of claim 2, wherein the processor (120) displays the at least one recommended item on a designated area of the first user interface.

5. The electronic device (101) of claim 2, wherein the processor (120) displays a description of the function in association with the at least one recommended item in the first user interface.

6. The electronic device (101) of claim 2, wherein the processor (120) displays a second user interface for changing a setting value related to the function when a first user input designated in at least one of the displayed recommended items occurs.

7. The electronic device (101) of claim 6, wherein the processor (120) displays a third user interface for setting an application related to the function when a third user input designated in at least one of the displayed recommended items occurs.

8. The electronic device (101) of claim 2, wherein the processor (120) displays a list of the at least one recommended item when a first user input designated in at least one of the displayed recommended items occurs.

9. The electronic device (101) of claim 8, wherein the processor (120) sorts the list according to a specified priority or time order.

10. The electronic device (101) of claim 1, wherein the state information includes information about the user account, information about the electronic device (101) or the external device (102, 104, 102a, 102b), information about an application executable in the electronic device (101) or the external device (102, 104, 102a, 102b).

11. The electronic device (101) of claim 1, wherein the processor (120) receives the rule from the external server (108) and store the rule in the memory (130).

12. The electronic device (101) of claim 1, wherein the processor (120) displays the at least one recommended item as a pop-up.

13. The electronic device (101) of claim 1, wherein the processor (120) displays the at least one recommended item as a widget that is movable in a designated direction.

14. The electronic device (101) of claim 1, wherein the at least one function includes at least one of auto hotspot, file sharing using short-range communication, offline device finding, Bluetooth synchronization, WiFi synchronization, and backup.

15. A device configuration method performed in an electronic device (101), the method comprising:
detecting a connection of an external device (102, 104, 102a, 102b) configured to have the same user account as the electronic device (101);
receiving state information of the electronic device (101) or the external device (102, 104, 102a, 102b) from an external server (108) or the external device (102, 104, 102a, 102b);
receiving state information of the electronic device (101) or the external device (102, 104, 102a, 102b) from an external server 108 or the external device (102, 104, 102a, 102b);
determining at least one function executed in association with the external device (102, 104, 102a, 102b) and a rule corresponding to the at least one function using the state information;
determining at least one recommended item related to the at least one function satisfying the rule using the state information; and
displaying the at least one recommended item.
